# EUROPEAN PATENT APPLICATION

(11) **EP 4 848 089 A1**
(43) Date of publication of application: **02.12.2026**
(21) Application number: 26181368.7
(22) Date of filing: 27.05.2026
(51) Int. Cl.: G06F 9/50, G06F 9/48

(54) **RESOURCE ALLOCATION SYSTEM, RESOURCE ALLOCATION METHOD, AND RESOURCE ALLOCATION PROGRAM**

(30) Priority: 30.05.2025 JP 2025091481
(71) Applicant: Hitachi, Ltd., Tokyo 100-8280 (JP)
(72) Inventor: ONO, Tatsuya, Tokyo, 100-8280 (JP); OGAWA, Masaaki, Tokyo, 100-8280 (JP)
(74) Representative: MERH-IP Matias Erny Reichl Hoffmann Patentanwälte PartG mbB

(57) **Abstract**

A resource allocation system for allocating a physical resource corresponding to a virtual resource designated for a container when the container operates based on the virtual resource includes: a container scheduler configured to determine a Pod deployment destination node based on the number of multiple executions of a Pod, the number of virtual CPUs designated for the Pod, and a physical CPU usage status of a node that executes the Pod; a resource dispatch processing unit configured to allocate a physical CPU that operates the container based on the number of virtual CPUs designated for the Pod, a virtual CPU number for operating the container, and an unused physical CPU of the node; and a container engine configured to activate the container using the physical CPU allocated by the resource dispatch processing unit.

## Description

### BACKGROUND OF THE INVENTION

### 1. Field of the Invention

The present invention relates to a resource allocation system, a resource allocation method, and a resource allocation program.

### 2. Description of Related Art

A container technique is an important technique for improving portability of an application, and makes it easy to determine, distribute, and execute a deployment destination of a container according to a resource amount (CPU or memory) included in a computer by taking advantage of features thereof, and enables efficient resource utilization.

In a control field, it is also important to improve efficiency of computer resources, but at the same time, it is also essential to achieve high real-time performance.

When a plurality of applications operate on the same computer, it is necessary to prevent interference due to resource contention between the applications.

When resources to be used by a container are allocated, resource contention can be prevented by performing setting in consideration of physical computer resources, but a decrease in the above-described portability of the container is a problem.

PTL 1 discloses a multilayer cluster control device implemented such that, when a processing cluster is deployed, deployment request information including a requirement for a processing cluster node and designation of a related cluster is received for each of a plurality of processing clusters, a matching container cluster node is specified based on the requirements for the processing cluster node and the processing cluster nodes constituting the related cluster, node specifying information indicating the specified container cluster node is transmitted as cluster policy information, a replacement group operating in the container cluster node within a predetermined range with respect to the container cluster node in which the processing cluster node of the processing cluster and the related cluster operates is specified, and information of the replacement group is transmitted to the processing cluster as the process policy information.

However, the multilayer cluster control device in PTL 1 is a technique for optimizing node arrangement between a container and cluster middleware operating as a container, and does not relate to real-time guarantee.

### Citation List

### Patent Literature

PTL 1: JP2024-101663A

### SUMMARY OF THE INVENTION

Since the multilayer cluster control device in PTL 1 designates the requirements of the CPU to deploy the container, it takes time to select the physical CPU. Further, there is a problem that an appropriate physical CPU cannot always be selected.

An object of the invention is to achieve both a real-time performance guarantee policy of a container application and maintenance of portability of a container. Container arrangement and resource control that enable efficient use of computer resources are implemented within a range in which real-time performance can be guaranteed.

The above problem is solved by a resource allocation system for allocating a physical resource corresponding to a virtual resource designated for a container when the container operates based on the virtual resource, and the resource allocation system includes: a container scheduler configured to determine a Pod deployment destination node based on the number of multiple executions of a Pod, the number of virtual CPUs designated for the Pod, and a physical CPU usage status of a node that executes the Pod; a resource dispatch processing unit configured to allocate a physical CPU that operates the container based on the number of virtual CPUs designated for the Pod, a virtual CPU number for operating the container, and an unused physical CPU of the node; and a container engine configured to activate the container using the physical CPU allocated by the resource dispatch processing unit.

It is possible to efficiently use computer resources within a range in which real-time performance can be guaranteed.

### BRIEF DESCRIPTION OF THE DRAWINGS

FIG. 1 is an example of a block diagram showing a configuration of a resource allocation system according to an embodiment;
FIG. 2 is an example of a block diagram showing a configuration of a main system node according to the embodiment;
FIG. 3 is an example of a block diagram showing a configuration of a node according to the embodiment;
FIG. 4 is an example of physical CPU allocation based on a Pod definition file according to the embodiment;
FIG. 5 is an example of cluster Pod operation information according to the embodiment;
FIG. 6 is an example of cluster node resource use information according to the embodiment;
FIG. 7 shows an example of a Pod definition file including the number of multiple executions according to the embodiment;
FIG. 8 is an example of a node definition file according to the embodiment;
FIG. 9 shows an example of Pod operation information according to the embodiment;
FIG. 10 is an example of resource allocation information according to the embodiment;
FIG. 11 is an example of a flowchart showing a process of the resource allocation system according to the embodiment;
FIG. 12 is an example of a flowchart showing a resource dispatch process according to the embodiment;
FIG. 13 is an example of a flowchart showing a container scheduler process according to the embodiment;
FIG. 14 is an example of a flowchart showing a node selection process according to the embodiment; and
FIG. 15 is an example of a block diagram showing a hardware structure of the resource allocation system according to the embodiment.

### DESCRIPTION OF EMBODIMENTS

Hereinafter, embodiments according to the invention will be described with reference to the drawings. The embodiments are examples for describing the invention, and are omitted and simplified as appropriate for clarity of description. The invention can be implemented in various other forms. Unless otherwise specified, each component may be singular or plural.

When there is a plurality of components having the same or similar functions, the plurality of components may be denoted by the same reference signs added with different subscripts. When it is not necessary to distinguish the plurality of components, the description may be made by omitting the subscripts.

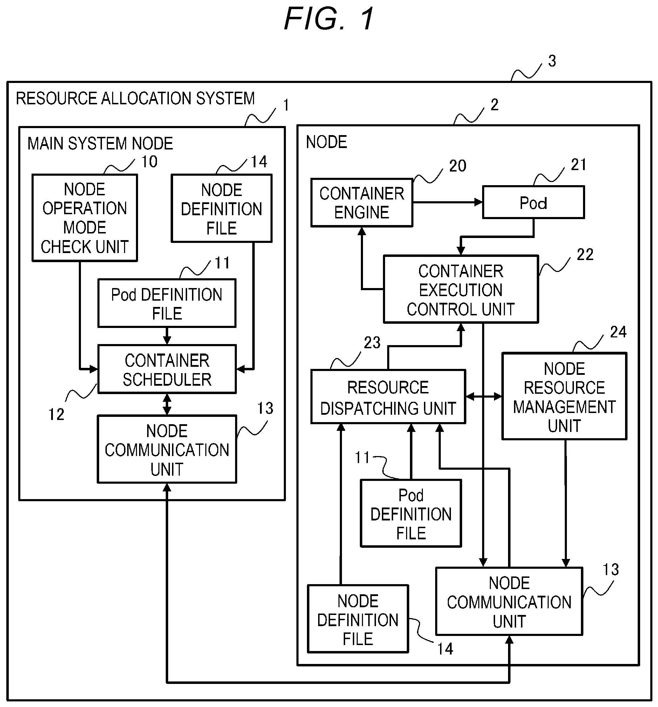

FIG. 1 is an example of a block diagram showing a configuration of a resource allocation system according to an embodiment. A resource allocation system 3 is implemented by a cluster including a main system node 1 and a node 2. One main system node 1 is present for each cluster, and there is a sub system node (not shown) that takes over a process when a failure occurs in the main system node 1. A configuration of the sub system node is the same as that of the main system node.

In addition, a backup mode that can be a main system node or a sub system node may be provided.

The main system node 1 includes a container scheduler 12 that schedules a container, receives an operating state of the node from a node operation mode check unit 10, receives specification information of the container operating in a Pod from a Pod definition file 11, and schedules the container.

Schedule information of the container created by the container scheduler is transmitted to a node communication unit 13 of the node that executes the container via the node communication unit 13.

In the node 2, a resource dispatching unit 23 allocates a resource such as a physical CPU required for executing the container based on the schedule information of the container received from the main system node 1.

The resource dispatching unit 23 selects a required resource based on resource information such as availability information of a physical CPU managed by a node resource management unit 24 and information on a resource required by the Pod defined in the Pod definition file 11, and instructs a container execution control unit 22 to execute the container.

The container execution control unit 22 instructs a container engine 20 to activate a container based on an instruction from the resource dispatching unit 23. A Pod 21 and a container included in the Pod 21 are activated by the container engine 20.

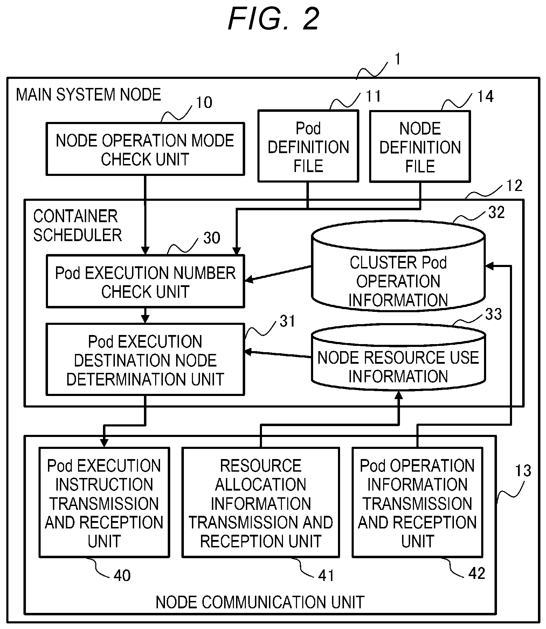

FIG. 2 is an example of a block diagram showing a configuration of the main system node according to the embodiment. The main system node 1 includes the container scheduler 12. The container scheduler 12 includes a Pod execution number check unit 30, and can refer to cluster Pod operation information 32 storing an operation status of a Pod to obtain the Pod required to be deployed.

The container scheduler 12 includes a Pod execution destination node determination unit 31, refers to node resource use information 33 in which information on resources usable by the node is stored, and selects a node capable of executing the Pod based on the availability information of the Pod obtained from the Pod execution number check unit 30.

The selected node is notified to the selected node via a Pod execution instruction transmission and reception unit 40 of the node communication unit 13. In addition, the node communication unit 13 includes a resource allocation information transmission and reception unit 41 that receives information on a resource usage status of a node from another node, and a Pod operation information transmission and reception unit 42 that receives operation information of a Pod from another node.

The node communication unit 13 having the same configuration as all the main system nodes 1 and the nodes 2 included in the cluster is provided, and the operation information of the Pod and resource use information of the nodes are shared, so that the main system node and the sub system node can be switched in real time when a failure occurs, and the backup mode can be changed to the sub system node.

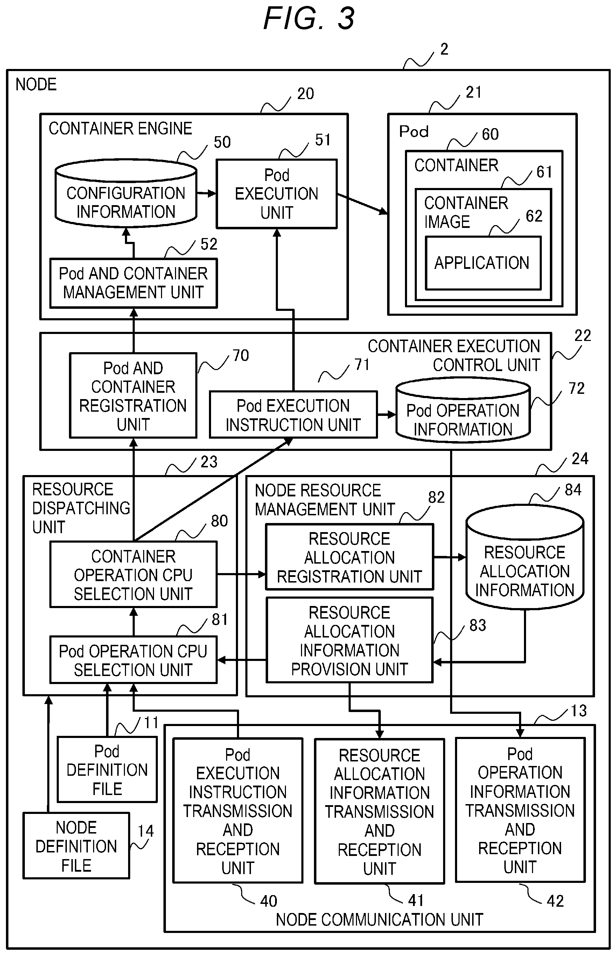

FIG. 3 is an example of a block diagram showing a configuration of a node according to the embodiment. The node 2 includes the resource dispatching unit 23, and the resource dispatching unit 23 includes a Pod operation CPU selection unit 81 that selects a resource based on a Pod execution instruction received from the Pod execution instruction transmission and reception unit 40 of the node communication unit 13.

The Pod operation CPU selection unit 81 receives resource availability information provided by a resource allocation information provision unit 83 of the node resource management unit 24 referring to resource allocation information 84. A physical CPU or the like is selected based on the received resource availability information and notified to a container operation CPU selection unit 80.

The container operation CPU selection unit 80 selects a physical CPU to be allocated to a container to be activated, and instructs the resource allocation registration unit 82 of the node resource management unit 24 to register the physical CPU in the resource allocation information 84.

Further, the container operation CPU selection unit 80 instructs a Pod and container registration unit 70 of the container execution control unit 22 to register the resource allocation to the Pod. The Pod and container registration unit 70 notifies a Pod and container management unit 52 of the container engine 20 of the resource allocated to the Pod and the container.

In the container engine 20, the Pod and container management unit 52 registers the resource allocated to the Pod and the container in configuration information 50. The Pod execution unit 51 activates the Pod and the container when receiving an execution instruction from a Pod execution instruction unit 71 of the container execution control unit 22 using the resource registered in the configuration information 50.

In the Pod, a container image is copied and an application of the container is activated. Further, the Pod execution instruction unit 71 updates Pod operation information 72, and the Pod operation information transmission and reception unit 42 shares the Pod operation information 72 with other nodes. The resource allocation information 84 is shared with other nodes by the resource allocation information transmission and reception unit 41 via the resource allocation information provision unit 83.

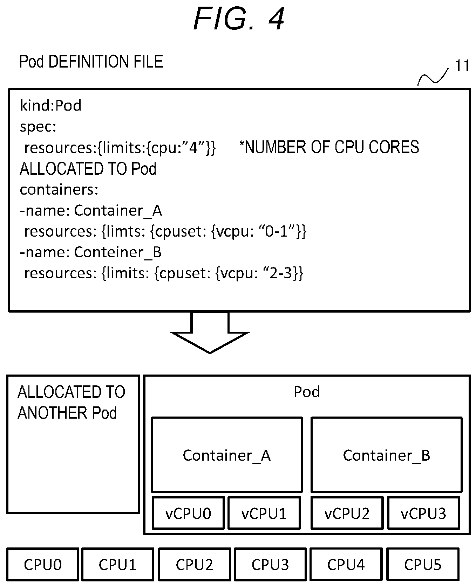

FIG. 4 is an example of physical CPU allocation based on a Pod definition file according to the embodiment. In this example, four physical CPUs are allocated to the Pod in the Pod definition file 11, a virtual CPU 0-1 is allocated to a container A, and a virtual CPU 2-3 is allocated to a container B.

The physical CPU has a CPU 0-5, but the CPU 0-1 is already allocated to another Pod. Therefore, a virtual CPU 0-3 is allocated to a physical CPU 2-5.

In this example, consecutive physical CPUs are allocated according to an arrangement of the numbers of the virtual CPUs, but if there are already allocated physical CPUs, the physical CPUs may be allocated discontinuously.

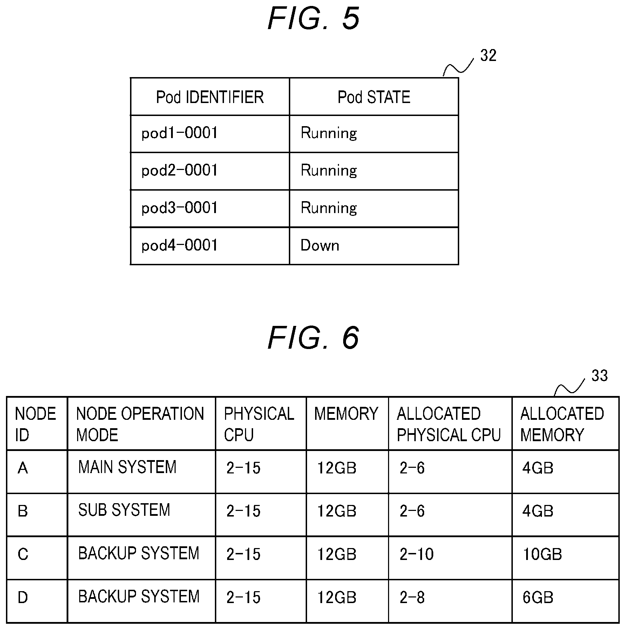

FIG. 5 is an example of cluster Pod operation information according to the embodiment. A Pod identifier and a Pod state are stored in association with each other, and if the Pod is operating, Running is displayed, and if the Pod is not operating, Down is displayed. In addition, when the Pod is not operating, information indicating that the Pod can be operated and information indicating that the Pod cannot be operated may be separately displayed.

FIG. 6 is an example of cluster node resource use information according to the embodiment. A node ID which is an identifier of a node, an operation mode of the node, a number of a physical CPU provided in the node, a memory amount provided in the node, an allocated physical CPU number, and an allocated memory are stored in association with one another.

The operation modes of nodes include the main system that provides services, the sub system that switches operations when a failure occurs in the main system, and the backup system that backs up the main system and the sub system.

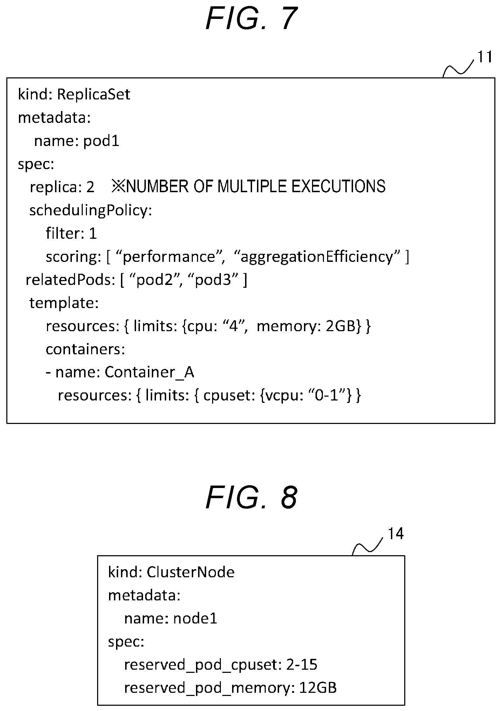

FIG. 7 shows an example of a Pod definition file including the number of multiple executions according to the embodiment. In this example, since a Pod named Pod 1 is designated as replica: 2, two Pods simultaneously provide services.

A scheduling Policy designates what operation is to be performed. Since filter: 1 is designated when an operation is performed, it is instructed to execute the Pod 1 in a node other than the nodes in which nodes of the main system and the sub system operate.

Performance and aggregation efficiency are designated in scoring. Therefore, in order to improve the performance, a node in which a Pod 2 and a Pod 3 designated by related Pods operate is set as a node candidate for executing the Pod 1 by designating the performance.

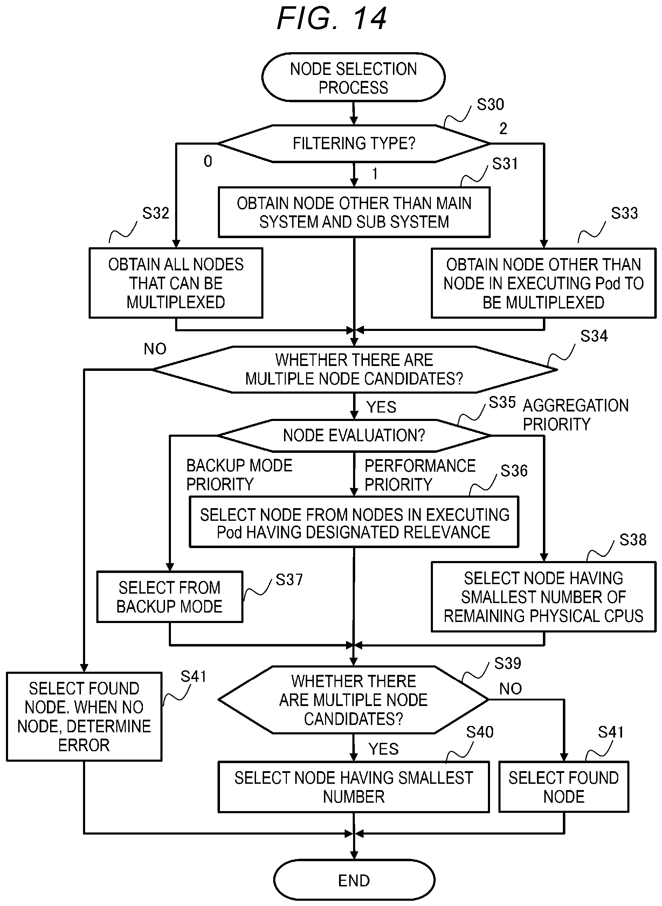

A Pod is shifted such that a physical CPU that cannot be allocated to a node by designating the aggregation Efficiency does not remain, and a node having the smallest number of remaining physical CPUs when the Pod 1 is allocated to the node is set as the node candidate for executing the Pod 1. A specific filtering process will be described with reference to FIG. 14.

FIG. 14 is an example of a flowchart showing a node selection process according to the embodiment. The filtering process is performed based on a filtering type designated in the Pod definition file 11 (S30). A case where the filtering type is not designated is the same as a case where a filtering type 0 is designated.

When the filtering type 0 is designated, all the nodes that can be multiplexed are obtained (S32). When a filtering type 1 is designated, a node capable of multiplexing is obtained from nodes other than the main system and the sub system (S31). When a filtering type 2 is designated, a node that can be multiplexed is obtained from nodes other than a node in executing the Pod to be multiplexed (S33).

It is determined whether a plurality of Pod deployment destination node candidates are found in the filtering process (S34). When the number of node candidates is 1 or less, the found node is selected, and when there is no node, an error is determined (S41).

When there are a plurality of node candidates (S34), a node evaluation process is performed to determine which node is to be selected as a deployment destination from the Pod deployment destination node candidates (S35). In a case of performance priority evaluation, a node is selected from the nodes in executing a Pod having designated relevance (S36). In a case of aggregation priority evaluation, a node having the smallest number of allocatable physical CPUs when the Pod is allocated is selected (S38). In a case of backup priority evaluation, a node is selected from the backup mode (S37).

If the performance priority evaluation is performed, it is possible to execute a Pod activated by the same node as a Pod having high relevance, and thus it is possible to provide a service with less overhead such as a communication process.

If the aggregation priority evaluation is performed, it is possible to solve a problem that a large number of nodes occur. In the large number of nodes, the number of physical CPUs remains to which it is difficult to allocate Pods.

As a result of the node evaluation, it is determined whether there are a plurality of node candidates (S39). If there are a plurality of node candidates, the node having the smallest number is selected (S40), and if there is one node, the found node is selected (S41) and the process ends.

FIG. 8 is an example of a node definition file according to the embodiment. In this example, a node named node 1 includes a physical CPU 2 to a physical CPU 15 and a 12GB memory.

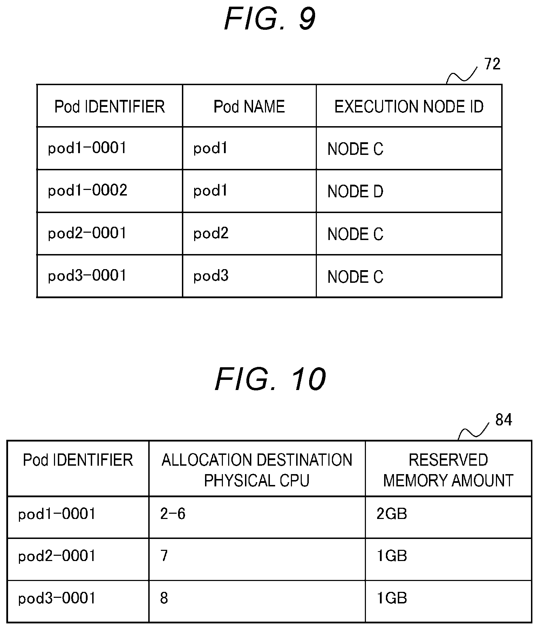

FIG. 9 shows an example of Pod operation information according to the embodiment. A Pod identifier, a Pod name, and an execution node ID are stored in association with each other. In this example, the Pod 1, the Pod 2, and the Pod 3 are executed in a node C, and the Pod 1 is also multiply executed in a node D.

FIG. 10 is an example of resource allocation information according to the embodiment. A Pod identifier, an allocation destination physical CPU, and a reserved memory amount are stored in association with one another.

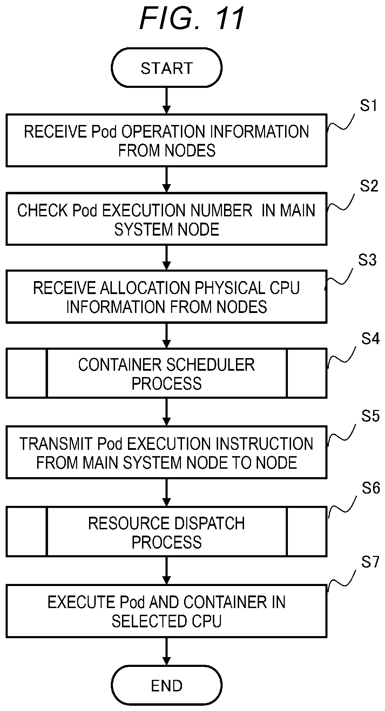

FIG. 11 is an example of a flowchart showing a process of the resource allocation system according to the embodiment. Pod operation information is received from nodes via the node communication unit 13 (S1). The main system node checks the Pod execution number (S2). Allocated physical CPU information is received from the nodes (S3).

As the Pod execution number and the allocated physical CPU information, the latest information may be received at the time of resource allocation, or change information may be received when the Pod execution number and the number of allocated physical CPUs are changed.

Next, the main system node performs a container scheduling process (S4), and the main system node transmits a Pod execution instruction to the node (S5).

Upon receiving the Pod execution instruction, the node performs a resource dispatch process (S6), and executes a Pod and a container in the selected physical CPU (S7).

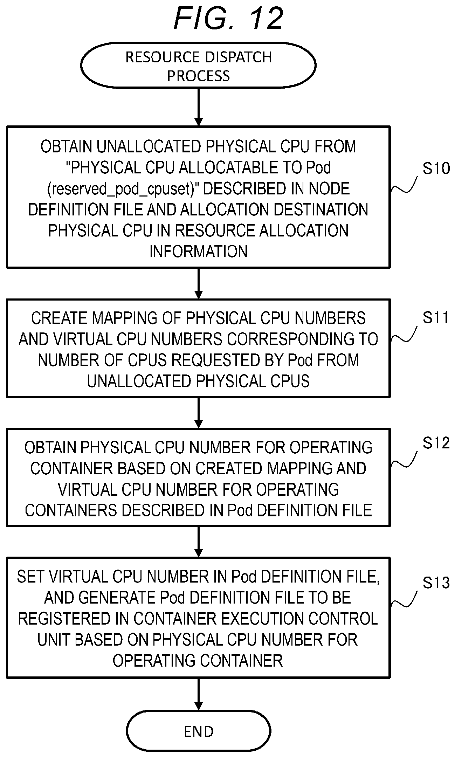

FIG. 12 is an example of a flowchart showing the resource dispatch process according to the embodiment. First, an unallocated physical CPU is obtained from the "physical CPU allocatable to Pod (reserved_pod_cpuset)" described in the node definition file 14 and the allocation destination physical CPU in the resource allocation information (S10).

Next, mapping of physical CPU numbers and virtual CPU numbers corresponding to the number of CPUs requested by the Pod is created based on the unallocated physical CPUs (S11).

Based on the created mapping and the virtual CPU core number for operating containers described in the Pod definition file, the physical CPU number for operating the container is obtained (S12).

Based on the physical CPU number for operating the container, the virtual CPU number is set in the Pod definition file, and the Pod definition file 11 to be registered in the container execution control unit 22 is generated (S13).

In the present embodiment, since it is assumed that an interface with an existing module is used, an inter-module interface by the Pod definition file 11 is described. Alternatively, another interface may be used as the inter-module interface.

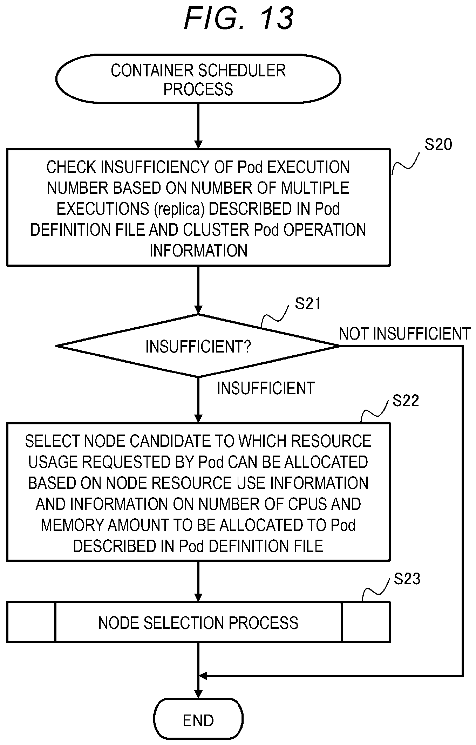

FIG. 13 is an example of a flowchart showing a container scheduler process according to the embodiment. First, insufficiency of the Pod execution number is checked based on the number of multiple executions (replica) described in the Pod definition file 11 and the cluster Pod operation information 32 (S20). If the Pod execution number is not insufficient, the process ends (S21).

If the Pod execution number is insufficient, a node candidate to which the resource usage requested by the Pod can be allocated is selected based on the node resource use information 33 and the information on the number of CPUs and the memory amount to be allocated to the Pod described in the Pod definition file 11 (S22). Next, the node selection process is performed based on the selected node candidate (S23).

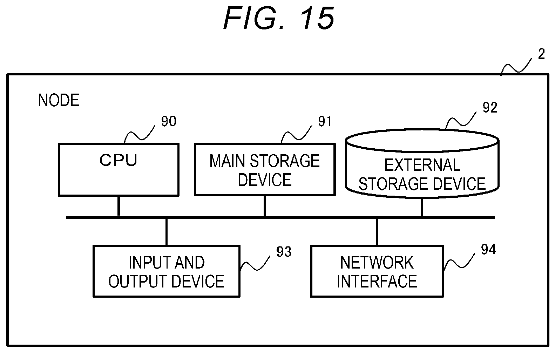

FIG. 15 is an example of a block diagram showing a hardware structure of the resource allocation system according to the embodiment.

The node 2 is a computer including a central processing unit (CPU) 90, a main storage device 91, an external storage device 92, an input and output device 93, and a network interface 94 that are connected by a bus.

The CPU 90 may be a processor such as a graphic processing unit (GPU). The main storage device 91 is a semiconductor element such as a read only memory (ROM) or a random access memory (RAM), the external storage device 92 is a storage device such as a hard disk drive (HDD) or a solid state drive (SSD), the input and output device 93 is a keyboard, a mouse, a touch panel, or the like, and the network interface 94 is a device such as a network interface card (NIC).

The main storage device 91 stores the node operation mode check unit 10, the container scheduler 12, the node communication unit 13, the container engine 20, the container execution control unit 22, the resource dispatching unit 23, the node resource management unit 24, and the like that are implemented as software modules.

The external storage device 92 stores data such as the node definition file 14, the Pod definition file 11, the cluster Pod operation information 32, the node resource use information 33, the Pod operation information 72, and the resource allocation information 84.

The software module stored in the main storage device 91 refers to data stored in the external storage device 92 and is executed by the CPU 90, so that a function of the node 2 is implemented.

## Claims

1. A resource allocation system for allocating a physical resource corresponding to a virtual resource designated for a container when the container operates based on the virtual resource, the resource allocation system comprising:
a container scheduler configured to determine a Pod deployment destination node based on the number of multiple executions of a Pod, the number of virtual CPUs designated for the Pod, and a physical CPU usage status of a node that executes the Pod;
a resource dispatch processing unit configured to allocate a physical CPU that operates the container based on the number of virtual CPUs designated for the Pod, a virtual CPU number for operating the container, and an unused physical CPU of the node; and
a container engine configured to activate the container using the physical CPU allocated by the resource dispatch processing unit.

2. The resource allocation system according to claim 1, wherein
the container scheduler performs a filtering process on a node and selects a node that executes a Pod.

3. The resource allocation system according to claim 2, wherein
In the filtering process, filtering is performed in which a node other than a main system and a sub system is a candidate for a node that executes a Pod, and filtering is performed in which a node other than a node in executing a Pod to be multiplexed is a candidate for a node that executes a Pod.

4. The resource allocation system according to at least one of claims 1 to 3, wherein
when there are a plurality of Pod deployment destination node candidates, the container scheduler performs a node evaluation process and selects a node that executes a Pod.

5. The resource allocation system according to claim 4, wherein
in the node evaluation process, performance priority evaluation of selecting a node from nodes in executing a Pod having predesignated relevance, aggregation priority evaluation of selecting a node from nodes having the smallest number of allocatable physical CPUs of the node when the Pod is allocated, and backup mode priority evaluation of selecting a node from backup modes are performed.

6. The resource allocation system according to at least one of claims 1 to 5, wherein
when there are a plurality of Pod deployment destination node candidates, the container scheduler selects a node having the smallest number of the deployment destination node candidate as a deployment destination.

7. A resource allocation method for allocating a physical resource corresponding to a virtual resource designated for a container when the container operates based on the virtual resource, the resource allocation method comprising:
determining, by a container scheduler, a Pod deployment destination node based on the number of multiple executions of a Pod, the number of virtual CPUs designated for the Pod, and a physical CPU usage status of a node that executes the Pod;
allocating, by a resource dispatch processing unit, a physical CPU that operates the container based on the number of virtual CPUs designated for the Pod, a virtual CPU number for operating the container, and an unused physical CPU of the node; and
activating, by a container engine, the container using the physical CPU allocated by the resource dispatch processing unit.

8. A resource allocation program for allocating a physical resource corresponding to a virtual resource designated for a container when the container operates based on the virtual resource, the resource allocation program causing a computer to:
determine a Pod deployment destination node based on the number of multiple executions of a Pod, the number of virtual CPUs designated for the Pod, and a physical CPU usage status of a node that executes the Pod;
allocate a physical CPU that operates the container based on the number of virtual CPUs designated for the Pod, a virtual CPU number for operating the container, and an unused physical CPU of the node; and
activate the container using the allocated physical CPU.
